# EUROPÄISCHE PATENTANMELDUNG

(11) **EP 1 184 649 A1**
(43) Veröffentlichungstag der Anmeldung: **06.03.2002**
(21) Anmeldenummer: 00810797.1
(22) Anmeldetag: 04.09.2000
(51) Int. Cl.: G01K 17/04, G01K 17/00

(54) **Kalorimeter**

(71) Anmelder: Eidgenössische Technische Hochschule Zürich, 8092 Zürich (CH)
(72) Erfinder: Zogg, Andreas, 8006 Zürich (CH); Wohlwend, Max, 8833 Samstagern (CH); Fischer, Ulrich, 8032 Zürich (CH); Hungerbühler, Konrad, 4451 Wintersingen (CH)
(74) Vertreter: Groner, Manfred

(57) **Zusammenfassung**

Das Kalorimeter weist einen Reaktor (1) auf, der in einen Zwischenthermostaten (2) eingebaut ist. Der Zwischenthermostat (2) arbeitet mit einem Aussenthermostaten (3) zusammen und weist als Wärmeträger einen Metallblock (4) auf. Ein solches Kalorimeter lässt sich wesentlich kostengünstiger herstellen als ein solches mit doppelwandigem Reaktionsgefäss und ermöglicht insbesondere Analysen mit einer IR-Sonde.

## Beschreibung

Die Erfindung betrifft ein Kalorimeter mit einem Reaktor nach dem Oberbegriff des Anspruchs 1.

Kalorimeter sind seit langem bekannt und dienen insbesondere während der Prozessentwicklung in der chemischen Industrie dem Reaktionsscreening. Hierbei werden chemische Reaktionen hinsichtlich der Thermodynamik und der Kinetik untersucht. Wesentliche Grössen sind beispielsweise die Reaktionstenthalpie, die Wärmekapazität und die Geschwindigkeitskonstanten.

Kalorimeter messen Wärmeflüsse von chemischen Reaktionen und physikalischen Umwandlungen. Isotherme, adiabate, isoperibole und temperaturprogrammierte Varianten werden angeboten. Für die Untersuchung von chemischen Reaktionen zur Bestimmung von ther-mokinetischen Daten werden isotherme Messbedingungen in der Praxis oft bevorzugt. Besonders bei der Kombination von Kalorimetrie und online Analytik sind isotherme Reaktionsbedingungen vorteilhaft, da sich die entsprechenden Signale als Funktion der Temperatur verändern können. Um isotherme Reaktionsbedingungen gewährleisten zu können, ist mit herkömmlicher Technik ein grosser apparativer Aufwand erforderlich.

Kalorimeter, welche isotherme Versuchsbedingungen erlauben, können in folgende Typen unterteilt werden: Heatflow, Heatbalance und Powercompensation. Die Grundlage der drei kalorimetrischen Messverfahren ist die Wärmeflussbilanz des Reaktionsgefässes. Die zu bestimmende Reaktionswärme als Funktion der Zeit kann durch die Wärmeflussbilanz berechnet werden, sofern alle anderen Glieder in der Bilanz, insbesondere die Rührenergie, die Wärmeflüsse durch die Reaktorwand und andere Verlustwärmeflüsse bekannt sind. Allen drei Typen gemeinsam ist das Problem des ändernden Wärmeübergangs an der Reaktorinnenwand während einer chemischen Reaktion. Entsprechende Prozesse müssen in der Wärmeflussbilanz entweder rechnerisch oder aber experimentell berücksichtigt werden. Experimentelle Methoden sind den rechnerischen immer zu bevorzugen, da die genauen Zusammenhänge für ein allgemeines System nicht bekannt sind.

Ein Kalorimeter mit einem Zwischenthermostaten, in welchem der Reaktor eingebaut ist, sowie einem Aussenthermostaten ist im Stand der Technik aus der DE-A-3049105 bekannt geworden. Dieser besteht im wesentlichen aus einem Reaktor mit einem Rührwerk, in dem mittels einer geregelten Heizung während des Ablaufs einer Reaktion isotherme Bedingungen unterhalten werden. Mittels einer Vorrichtung wird die elektrische Leistung gemessen, welche zur Aufrechterhaltung der isothermen Bedingungen erforderlich ist. Dieses Kalorimeter arbeitet nach dem oben genannten Prinzip der sogenannten "Powercompensation". Im Reaktor herrscht die höchste Temperatur und im Zwischenthermostaten eine mittlere Temperatur. Im Hauptthermostaten herrscht die niedrigste Temperatur. Entsprechend der konstanten Temperaturdifferenz zwischen Reaktor und Zwischenthermostat fliesst ein Wärmestrom aus dem Reaktor in den Zwischenthermostaten, und ein weiterer Wärmestrom fliesst vom Zwischenthermostat in den Hauptthermostaten. Startet im Reaktor eine Reaktion, so sorgt ein mit einer Heizung verbundener Regler dafür, dass während des Reaktionsverlaufs trotz der einsetzenden Reaktionswärme die Temperaturdifferenz zwischen Reaktor und Zwischenthermostat konstant bleibt. Eine Zwischenthermostatwand ist von einem Rohrschlangensystem gebildet, das von der Thermostatflüssigkeit des Hauptthermostaten turbulent durchströmt wird. Die Thermostatflüssigkeit ist üblicherweise ein flüssiger Wärmeträger, welcher das Reaktionsgefäss umströmt und auf eine gewünschte Temperatur geregelt werden kann. Damit die Thermostatflüssigkeit den Reaktor umströmen kann, ist ein Doppelmantel erforderlich. Bei einem solchen Doppelmantel besteht insbesondere die Schwierigkeit, dass in diesem örtliche Inhomogenitäten auftreten können. Zudem ist die Herstellung und die Thermostatierung eines doppelwandigen Reaktionsgefässes aufwendig. Anwendungen unter Druck sind schwierig oder nicht möglich. Nachteilig ist zudem, dass das Reaktorvolumen vergleichsweise gross ist und entsprechend grosse Mengen an Testsubstanz hergestellt werden müssen. Die grossen Abmessungen und die Komplexität des Thermostatisiersystems bedingen, dass eine Parallelisierung aufwendig wäre.

Ein weiteres Kalorimeter ist in der US-A-4,456,389 offenbart. Dieses ist ebenfalls mit einem Doppelmantel versehen, der eine Thermostatflüssigkeit enthält, die mit einer Pumpe umgewälzt wird. Dieses Kalorimeter erlaubt isotherme Versuchsbedingungen, es weist jedoch ein verglichen grosses Volumen auf. Das hier angewendete Prinzip "Heat Flow" führt zu einer vergleichsweise trägen Apparatur bezüglich schnell ändernder Wärmeflüsse. Die oben erwähnte Schwierigkeit des sich ändernden Wärmeübergangs der Reaktionsinnenwand während der Reaktion kann mit diesem Kalorimeter nicht vollständig experimentell behandelt werden. Eine Parallelisierung wäre aus analogen Gründen wie im vorigen Beispiel aufwendig.

Der Erfindung liegt die Aufgabe zugrunde, ein Kalorimeter der genannten Art zu schaffen, das die oben genannten Schwierigkeiten vermeidet. Das erfindungsgemässe Kalorimeter soll mit einem wesentlich einfacheren Aufbau realisierbar sein und trotzdem exakte Messungen liefern. Zudem soll es auf einfache Art mit weiteren Analysemethoden wie beispielsweise einer IR-Sonde, ausgestattet werden können.

Die Erfindung ist gemäss Anspruch 1 gelöst. Beim erfindungsgemässen Kalorimeter ist der Zwischenthermostat im wesentlichen durch einen Metallblock gebildet. Das bisher seit langem übliche doppelwandige Reaktionsgefäss und die für die Zirkulation des Kühlmediums notwendigen Vorrichtungen sind beim erfindungsgemässen Kalorimeter nicht erforderlich. Die bisher übliche Thermostatenflüssigkeit ist beim erfindungemässen Reaktor durch den Metallblock ersetzt. Das Reaktionsgefäss lässt sich im wesentlichen durch eine einfache Bohrung im Metallblock realisieren. Ein wesentlicher Vorteil des erfindungsgemässen Kalorimeters wird auch darin gesehen, dass z.B. eine IR-ATR-Sonde in einfacher Weise durch eine einfache Bohrung des Metallblocks seitlich eingeführt werden kann und dass die in das Reaktionsgefäss eintauchende Sonde durch den Metallblock gleichzeitig temperiert wird. Der Wärmefluss durch die Sonde muss deshalb nicht mehr getrennt vom Wärmefluss durch die Reaktorwand behandelt werden. Das erfindungsgemässe Kalorimeter ermöglicht zudem Anwendungen unter Druck und Anwendungen mit sehr kleinen Mengen an Testsubstanz. Die Gesamtgrösse des Kalorimeters kann sehr klein gehalten werden, wodurch auch Parallelversuche ohne weiteres möglich sind.

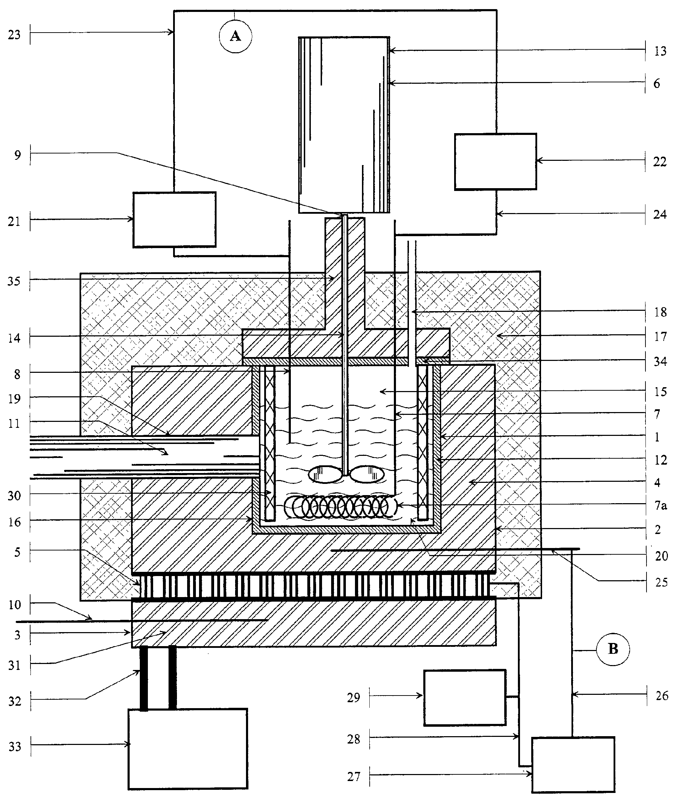

Weitere vorteilhafte Merkmale ergeben sich aus den abhängigen Patentansprüchen, der nachfolgenden Beschreibung, sowie der Zeichnung.

Ein Ausführungsbeispiel der Erfindung, welches vorzugsweise für isotherme Versuchsbedingungen ausgelegt wird, wird nachfolgend anhand der einzigen Figur erläutert. Die Figur zeigt schematisch einen Schnitt durch ein erfindungsgemässes Kalorimeter. Das Kalorimeter weist einen Reaktor 1 mit einem Reaktorinnenraum 15 auf, der in einen Zwischenthermostaten 2 eingebaut ist. Der Zwischenthermostat 2 ist auf einen Aussenthermostaten 3 aufgebaut und weist einen Metallblock 4 auf, der mit einer Reaktorbohrung 16 den Reaktorinnenraum 15 bildet. Eine IR-Sonde 11 kann durch eine seitliche Bohrung 19 in den Reaktorinnenraum 15 eingeführt und druckdicht abgeschlossen werden. Der Metallblock 4 wird durch Isolationsmaterial 17 aussenseitig isoliert. Die Reaktorbohrung 16 kann innenseitig mit einem Reaktormantel 12 versehen sein, der vorzugsweise aus einem inerten Werkstoff, beispielsweise aus Tetrafluoräthylen oder Email besteht. Es sind auch Ausführungen denkbar, bei welchen die Reaktorwand 12 direkt durch den Metallblock 4 gebildet wird. Ein solcher Metallblock kann beispielsweise aus Stahl oder einer anderen Metallegierung bzw. Metall hergestellt sein. Ein geeigneter Werkstoff für den Metallblock ist beispielsweise Aluminium, wobei hierbei in der Regel ein Reaktormantel 12 erforderlich ist. Der Werkstoff des Metallblockes 4 soll insbesondere stabil und wärmeleitend sein. Geeignet können hier auch Silber sowie Kupfer und entsprechende Legierungen sein. Der Reaktormantel 12 ist insbesondere eine Kunststoffbeschichtung aus einem chemisch möglichst inerten Kunststoff. Denkbar ist auch eine Beschichtung aus Email.

Bei einem möglichen Versuch befindet sich im Innenraum 15 eine Testsubstanz 20, beispielsweise eine Lösung, die mit einem Rührwerk 6 gerührt wird, das im wesentlichen aus einem Antrieb 13, einem Rührer 14 sowie einer Kupplung 9 zwischen dem Antrieb 13 und dem Rührer 14 aufweist. Die Kupplung 9 ist vorzugsweise eine Magnetkupplung oder eine Gleitringdichtung. Für eine optimale Durchmischung sind Strömungsbrecher 30 angebracht.Der Innenraum 15 wird von einem Deckel 34 verschlossen, auf dem sich ein Führungskörper 35 für den Rührer 14 befindet. Durch einen nach aussen führenden Kanal 18 können beispielsweise die Ausgangsstoffe zugeführt werden. Weitere Kanäle können beispielsweise für die Druckmessung oder die Inertgaszuführung verwendet werden. In die Testsubstanz 20 bzw. in den Reaktorinnenraum 15 ragt eine geregelte elektrische Kompensationsheizung 7 sowie ein Temperaturfühler 8. Die Heizung 7 und der Temperaturfühler 8 bilden mit einem Temperaturregler 21 und einem Leistungsmesser 22 einen ersten Regelkreis A. Mittels dieses Regelkreises A, der auch als Innenthermostat bezeichnet werden kann, wird die Reaktorinnentemperatur auf einen konstanten Wert geregelt. Diese Regelung kann sehr schnell erfolgen, da erstens die Trägheit der Testsubstanz 20 bedingt durch ihr kleines Volumen vergleichsweise klein gehalten werden kann und zweitens die Heizung 7, die beispielsweise einen Heizdraht 7a aufweist, sehr schnell auf Änderungen der Temperatur reagieren kann. Die zur Regelung erforderliche elektrische Energie der Heizung wird als Wärmesignal während der ganzen Messung aufgezeichnet. Die Regelfrequenz beträgt beispielsweise 10Hz. Die Temperatur im Reaktorinnenraum 15 bzw. in der Testsubstanz 20 wird somit durch den Regelkreis A konstant gehalten. Die dazu erforderliche Leistung der Heizung 7 wird als Wärmefluss in die Wärmebilanz des Kalorimeters einbezogen. Wie ersichtlich, ist der Temperaturregler 21 über eine Signalleitung 23 mit dem Leistungsmesser 22 verbunden. Die Stromversorgung der Heizung 7 erfolgt über eine Leitung 24.

Der Zwischenthermostat 2 weist Peltierelemente 5 auf, die wärmeleitend mit dem Metallblock 4 sowie einem Wärmetauscher 31 verbunden sind. Der Zwischenthermostat 2 bildet vorzugsweise ein Heiz- als auch ein Kühlelement. Dies wird durch die Peltierelemente 5 in an sich bekannter Weise ermöglicht. Der Metallblock 4 kann über den Zwischenthermostaten 2 somit sowohl gekühlt als auch geheizt werden. Der Aussenthermostat 3 weist einen Wärmetauscher 31 auf, der wärmeleitend mit den Peltierelementen 5 verbunden ist. Ein Schlauch 32 verbindet den Wärmetauscher 31 beispielsweise mit einem Kryostaten 33 oder mit Kühlwasser.

Die Temperatur des Wärmetauschers 31 muss nicht geregelt werden. Dies ist deshalb nicht nötig, weil die Peltierelemente 5 ausgehend von der Temperatur des Wärmetausches sowohl nach oben als auch nach unten variable Temperaturdifferenzen einstellen können. Die einzige Anforderung an den Wärmetauscher 31 besteht darin, dass er genügend grosse Kühlkapazität aufweist und dass die Temperaturschwankungen während eines Experimentes nicht grösser als etwa 2°C sind. Die Temperatur des Wärmetauschers 31 kann durch einen weiteren Temperaturfühler 10 gemessen werden. Die Temperatur des Metallblockes 4 wird mittels eines zweiten Regelkreises B isotherm geregelt. Dieser Regelkreis B weist eine Temperatursonde 25 auf, welche die Temperatur des Metallblockes 4 misst und über eine Leitung 26 einem Temperaturregler 27 zuführt. Anstelle einer Temperatursonde 25 können auch mehrere Temperatursonden verwendet werden. Damit kann eine Temperaturverteilung im Metallblock gemessen werden, was grundsätzlich die Durchführung von nicht isothermen Versuchen ermöglicht. Der Regler 27 ist über eine Leitung 28 mit einem Leistungsmesser 29 sowie mit den Peltierelementen 5 verbunden. Der Metallblock 4 weist bezüglich seiner isothermen Regelung eine etwas grössere Trägheit als eine übliche Thermostatflüssigkeit auf. Da jedoch lediglich Änderungen im Wärmeübergang an der Reaktorinnenwand von der Regelung zu kompensieren sind, sind die dazu erforderlichen Geschwindigkeiten ausreichend. Eine Zeitverzögerung könnte falls erforderlich rechnerisch kompensiert werden.

Für die Temperaturen der Testsubstanz 20, des Metallblocks 4, sowie des Wärmetauschers 31 gelten während eines isothermen Experimentes die folgenden Bedingungen:
1. Temperaturtestsubstanz - Temperaturmetallblock = ΔTR
2. ΔTR > 0
3. Sowohl die Temperatur der Testsubstanz 20 als auch die Temperatur des Metallblocks 4 werden von den zwei Regelkreisen A und B konstant geregelt.
   Somit gilt:
   ΔTR = konstant.
4. Die Temperatur des Wärmetauschers 31 schwankt maximal um +/- 2°C
5. Die Temperatur des Wärmetauschers 31 ist innerhalb eines gewissen Bereiches weitgehend unwichtig. Sie kann beispielsweise in einem Bereich von -100° bis +200° C von der Temperatur des Metallblockes 4 entfernt sein.

Beim Kalorimeter wird somit zusätzlich zum Leistungssignal der Kompensationsheizung 7 ein zweites Wärmesignal gemessen. Dieses entspricht der Leistung, welche von den Peltierelementen 5 benötigt wird, um die Temperatur des Metallblocks 4 isotherm zu regeln. Die zwei gemessenen elektrischen Leistungen lassen sich wie folgt beschreiben:
1. Die zur konstanten Regelung der Temperatur der Testsubstanz 20 erforderliche Leistung der Kompensationsheizung 7 enthält die Summe aus Reaktionsleistung und Wärmefluss durch die Reaktorinnenwand.
2. Die zur konstanten Regelung der Temperatur des Metallblocks 4 erforderliche Leistung der Peltierelemente 5 enthält den Wärmefluss durch die Reaktorinnenwand. Sie ist unabhängig von der Reaktionsleistung.

Damit ist die gewünschte experimentelle Trennung der genannten beiden Wärmeflüsse möglich. Es können damit auch Änderungen im Wärmeübergang an der Reaktorinnenwand gemessen und in der Wärmeflussbilanz berücksichtigt werden. Das genannte Messprinzip basierend auf der Kompensationsheizung 7 und die Wärmeflussmessung mittels Peltierelementen 5 sind sehr einfach und auf kleinem Raum realisierbar. Durch die direkte Beheizung bzw. Kühlung des Metallblocks und des Reaktorinnerns mittels elektrischen Heiz- bzw. Kühlelementen gestaltet sich auch die Regleung der entsprechenden Temperaturen sehr einfach. Die Grössenordnung des Gesamtvolumens der Apparatur beträgt beispielsweise 0,5m x 0,2m x 0,2m. Es lassen sich ohne weiteres mehrere solche Kalorimeter in einer Kapelle unterbringen. Zudem kann der Wärmetauscher 31 so ausgebildet werden, dass mehrere Kalorimeter gleichzeitig bedient werden und eine Parallelisierung möglich wird. Bei einer solchen Parallelisierung sind mehrere Reaktoren auf einfache Art auf einem gemeinsamen entsprechend grossen Aussenthermostaten aneinandergereiht. Wesentlich ist, dass hierbei die Metallblöcke der Reaktoren auf unterschiedliche Temperaturen geregelt werden können. Dies insbesondere deshalb, weil die Reaktoren jeweils einen eigenen Zwischenthermostaten aufweisen.

## Patentansprüche

1. Kalorimeter mit einem Reaktor (1), der in einen Zwischenthermostaten (2) eingebaut ist, der mit einem Aussenthermostaten (3) zusammenarbeitet, **dadurch gekennzeichnet, dass** der Zwischenthermostat (2) als Wärmeträger einen Metallblock (4) aufweist.

2. Kalorimeter nach Anspruch 1, **dadurch gekennzeichnet, dass** die Temperatur des Metallblocks (4) während des Ablaufs einer Reaktion gemessen wird.

3. Kalorimeter nach Anspruch 1 oder 2, **dadurch gekennzeichnet, dass** die Temperatur des Metallblocks (4) geregelt und die zur Regelung benötigte Leistung von Heiz- und/oder Kühlelementen (5) aufgezeichnet und als Wärmefluss in die Wärmeflussbilanz des Kalorimeters eingeht.

4. Kalorimeter nach Anspruch 3, **dadurch gekennzeichnet, dass** die Heiz- und/oder Kühlelemente Peltierelemente (5) sind.

5. Kalorimeter nach Anspruch 3 oder 4, **dadurch gekennzeichnet, dass** die von den Heiz- und/oder Kühlelementen (5) abgegebene bzw. aufgenommene Wärme durch einen Wärmetauscher (31) aufgenommen bzw. abgegeben wird.

6. Kalorimeter nach einem der Ansprüche 1 bis 5, **dadurch gekennzeichnet, dass** die Temperatur einer Testsubstanz (20) im Reaktor (1) mittels einer Kompensationsheizung (7) sowie einem Temperaturfühler (8) geregelt wird.

7. Kalorimeter nach Anspruch 6, **dadurch gekennzeichnet, dass** ein Rührwerk (6) durch eine Magnetkupplung (9) oder Gleitringdichtung abgeschlossen ist.

8. Kalorimeter nach einem der Ansprüche 1 bis 7, **dadurch gekennzeichnet, dass** in dem Metallblock (4) eine Sonde (11) für chemische und/oder physikalische Messungen eingesetzt ist und diese Sonde (11) vom Metallblock (4) temperiert wird.

9. Kalorimeter nach einem der Ansprüche 1 bis 8, **dadurch gekennzeichnet, dass** er mehrere Reaktoren (1) aufweist, die auf einem gemeinsamen Aussenthermostaten (3) aufgebaut sind.
